# EUROPEAN PATENT SPECIFICATION

(11) **EP 2 036 744 B1**
(45) Date of publication and mention of the grant of the patent: **14.12.2011**
(21) Application number: 08154043.7
(22) Date of filing: 04.04.2008
(51) Int. Cl.: B60C 23/00

(54) **Tire pressure monitoring device with LED warning light turned on by mechanical pressure switch**
Vorrichtung zur Überwachung des Reifendrucks mit LED-Warnlicht, das durch einen mechanischen Druckschalter angeschaltet wird
Dispositif de surveillance de la pression d'un pneu avec avertisseur lumineux DEL activé par un interrupteur de pression mécanique

(30) Priority: 10.08.2007 CN 200711277816; 13.11.2007 US 985019
(43) Date of publication of application: 18.03.2009
(73) Proprietor: Vehold B.V., 2719 RA Zoetermeer (NL)
(72) Inventor: Verweij, Jan Hendrik, 2719 RA Zoetemeer (NL)
(74) Representative: Hatzmann, Martin

(56) References cited:
- EP-A1- 1 522 835
- US-A- 5 025 244
- US-A- 5 856 619
- US-A1- 2003 141 969
- US-A1- 2006 191 466

## Description

### BACKGROUND OF THE INVENTION

1. Field of the Invention The present invention is generally related to device configuration and method of a tire pressure-sensing (TPS) and low-pressure warning device. More particularly, this invention is related to device configuration and mechanical pressure switch design for implementing a compact tire pressure monitoring to mechanically turning on a light emitting diode (LED) for providing a low pressure warning light when the tire pressure is lower than a threshold pressure.

### 2. Description of the Related Art

Conventional technologies and devices for measuring the changes of tire pressure are still faced with the difficulties that the tire pressure measurements and warning often require continuously supply of a battery power. A battery has a limited lifetime and the power consumed for continuously monitoring and providing low pressure-warning signals may not be reliable if the capacity of battery is depleted.

Generally there are two types of tire pressure monitoring systems (TPMS). The first type of TPMS is an indirect tire pressure monitoring system that monitoring the changes of tire pressures by monitoring the rotational speed differences as that detected and transmitted through the ABS speed transmitter. This type of TPMS has a limitation that the tire pressure monitoring operation would become ineffective when there are simultaneous tire-pressure changes occur in more than one tires. Also, the TPMS become unreliable when a vehicle is traveling at a speed more than one hundred kilometers per hour. A second type of tire pressure-monitor system is a direct tire pressure monitoring system implemented with tire pressure measurement devices directly mounted on the tire. The tire pressures are measured and monitored continuously. Once the tire pressure in a tire is lower or higher than a threshold value, an alarm signal is generated.

US 5,025,244 (Huang) discloses a known electronic tire pressure indicator of the direct type. It includes a hollow cylindrical body with a closed side and an open side; a light bulb with a threaded negative portion and a positive contact detachably mounted at the closed side of the hollow cylindrical body; a transparent cover positioned at the closed side over the light bulb; a first conductor, together with a piston container, connected to the threaded negative portion of the light bulb; a sleeve member movably disposed around the piston container in the hollow cylindrical body; a piston unit composed of a mercury cell, a pressure spring and a sliding member movably disposed in the piston container; a pressure sensor which is a combination of a flexible film member, a second conductor and an air-channel member fixed on the closed side of the sleeve member under the piston unit; and a supporting base with an air chamber screw-connected to the open side of the hollow cylindrical body; whereby, when the air pressure indicator is connected to the tire valve of an associated tire, the tire pressure condition of the associated tire can be monitored and indicated via the light bulb without incurring any air pressure leakage of the associated tire.

US 2006/191466 (Huang) discloses a known and altogether mechanical tire pressure warning device of the direct type. The tire pressure warning device with adjustable pressure setting includes a case divided into a lower and an upper chamber and having a shoulder portion formed near a top thereof; a valve structure mounted in the lower chamber of the case; a membrane, a bushing, a push member, an elastic element, and a pressure-adjusting element sequentially mounted in the upper chamber of the case; and a cover connected to the top of the case. While the elastic element defines a basic pressure setting for the device to measure the air pressure inside a specific type of tire, a pressure-adjusting element with a suitable thickness may be selected to adjust the tightness of an elastic fixing element and thereby changes the pressure setting for the device, so that the device could also be used to measure the tire pressure of other different types of tires.

The direct type of TPMS has definite advantages of higher accuracy and reliability over the indirect type of TPMS. However, a discussed above, the direct TPMS devices still have limit capability to effectively transmit pressure monitoring signals and furthermore, there still lacks an antitheft device mechanism with the tire pressure monitoring devices directly mounted onto the tires. Practical application of the direct TPMS devices would still have the concerns that such devices may often be stolen and lost due to such limitations.

In order to resolve the power consumption limitation when a battery is implemented in the tire pressure-rnonitoring device, it generally requires the use of a programmable chip with intelligence built into a controller. Such implementation often leads to a higher production cost of the power-monitoring device. The application of the tire pressure monitoring device and systems become uneconomical due to the higher cost of implementation. The higher price of tire-pressure monitoring and control would often limit the practical marketability and usefulness of such devices and systems.

Therefore, there is still need to design and manufacture a tire pressure monitor device and system with further simplified and convenient to implement devices that would enable those of ordinary skill in the art to overcome such difficulties and limitations.

### SUMMARY OF THE INVENTION

Accordingly, it is an aspect of the present invention to provide a tire-pressure monitoring device (TPMD) directly mounted onto a tire. The TPMD is designed that can be automatically activated only when a tire pressure is lower than a threshold voltage to supply power to a light emitting diode (LED). Immediately upon detecting a low pressure, a low pressure warning light is turned on to provide a warning signal to a driver of the low-pressure condition. By implementing such TPMD, the battery power of the TPMS of a sensing and warning device directly mounted on the tires can be preserved for long-term operation.

It is another aspect of this invention that the present invention provides a tire-pressure monitoring device (TPMD) that has an improved accuracy in detecting a low-pressure condition to turn on a waning light by turning on a light emitting diode (LED) to project a low pressure warning signal. The low-pressure condition can be accurately detected and timely corrected.

Briefly, this invention discloses a tire pressure-monitoring device (TPMD) directly mounted onto an air-pumping inlet-stem on a tire. The TPMD further includes a light emitter connected to a battery through an electrical connecting loop wherein the electrical connecting loop comprising a plurality of electrical conductive structural components and at least two of the structural components are physically separated in a normal tire pressure condition and connected in a low pressure tire pressure condition for providing power to the light emitter for emitting a low tire pressure warning light. In an exemplary embodiment, the TPMD further includes a tire-pressure engaging-membrane engaged to an air pressure through the air-pumping inlet-stem pushed from an air filled in the tire and the tire-pressure engaging-membrane further engaging to at least one of the electrical conductive components for applying a force thereon to break the electrical connecting loop in a normal tire pressure condition and applying a reduced force to one of the conductive structural components in a low tire pressure condition for closing the electrical connecting loop for providing electrical power from the battery to the light emitter to transmit a low pressure warning light. In another exemplary embodiment, the TPMD further includes a tire-pressure adjustment spring for adjusting a pressure applied by one of the conductive structural components to the pressure engaging-membrane for adjusting a pressure when the conductive structural component pushing back the tire pressure engaging membrane to close the electrical connecting loop for the light emitter to transmit the low pressure warning signal. In another exemplary embodiment, the TPMD further includes a transparent cover for covering and protecting the TPMD and for transmitting the low-pressure warning signal through the transparent cover.

Specifically, this invention discloses a method for mounting a tire pressure-monitoring device (TPMD) directly onto an air-pumping inlet-stem on a tire for providing a low-pressure warning light. The method includes a step of connecting a light emitter to a battery through an electrical connecting loop comprising a plurality of electrical conductive structural components of the TMPD and physically separating at least two of the structural components in a normal tire pressure condition and connecting the two conductive structural components in a low pressure tire pressure condition for providing power to the light emitter for emitting the low tire pressure warning light In an exemplary embodiment, the method further includes a step of employing a tire-pressure engaging-membrane for engaging to an air pressure through the air-pumping inlet-stem pushed from an air filled in the tire and engaging the tire-pressure engaging-membrane to at least one of the electrical conductive components for applying a force thereon to break the electrical connecting loop in a normal tire pressure condition and applying a reduced force to one of the conductive structural components in a low tire pressure condition for closing the electrical connecting loop for providing electrical power from the battery to the light emitter to transmit the low pressure warning light. In another exemplary embodiment, the method further includes a step of employing a tire-pressure adjustment spring for adjusting a pressure applied by one of the conductive structural components to the pressure engaging-membrane for adjusting a pressure when the conductive structural component pushing back the tire pressure engaging membrane to close the electrical connecting loop for the light emitter to transmit the low pressure warning signal. In another exemplary embodiment, the method further includes a step of covering and protecting the TMPD by a transparent cover and transmitting the low-pressure warning signal through the transparent cover.

These and other objects, features and advantages of the present invention will no doubt become apparent to those skilled in the art after reading the following detailed description of the preferred embodiments that are illustrated in the several accompanying drawings.

### BRIEF DESCRIPTIONS OF THE DRAWINGS

The present invention can be better understood with reference to the following drawings. The components within the drawings are not necessarily to scale relative to each other, emphasis instead being placed upon clearly illustrating the principles of the present invention.
Fig. 1 is a function assembly perspective diagram for illustrating the structure and function of a tire-pressure monitoring device of this invention.
Fig. 2 shows a perspective view of the tire-pressure monitor device when assembled and housed and protected in a base-housing cylinder assembled to an upper cover assembly.

### DETAILED DESCRIPTION OF THE PREFERRED EMBODIMENTS

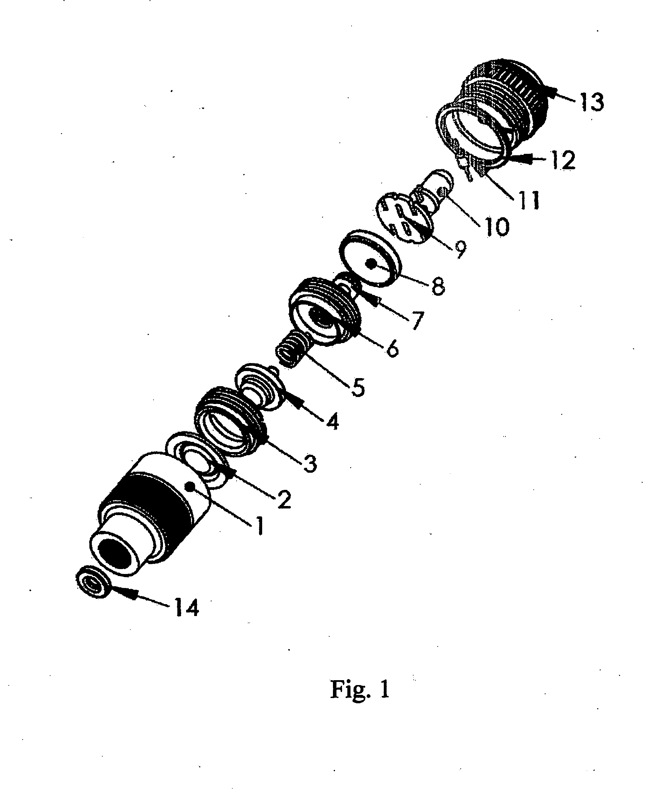

This invention discloses a tire-pressure monitoring device directly mounting to a tire and continuously monitors the pressure in each tire. When a tire pressure is lower than a threshold low pressure, a light-emitting device as part of the tire-pressure monitoring device is activated. A low tire-pressure warning light is turned on to provide a warning of the low tire-pressure condition. Fig. 1 shows the structural configuration of the tire-pressure monitoring device according to an exemplary embodiment of the present invention. The tire-pressure monitoring device (TPMD) as disclosed has a simplified structure, easy to convenient to manufacture and assemble, can be conveniently mounted on a tire, easy to operate. Furthermore, the TPMD can be manufactured and operated at a very economical cost with effective monitoring process to assure proper tire pressure is maintained in each tire.

In an exemplary embodiment of the invention as shown in Fig. 1, the tire pressure-monitoring device includes a base assembly and an upper-cover assembly that can be screwed onto the base assembly as an assembled tire-pressure monitoring device.

The base assembly includes a cylinder housing 1 for receiving and containing a tire-pressure membrane 2 securely pressed and fixed in title cylinder housing 1 by a press-down ring 3. A receiving cup 4 extends through the central hole of title press-down ring to press and engage the tire-pressure membrane 1 when the tire pressure is lower than a threshold tire pressure. A pressure adjustment spring 5 extends to the receiving cup 4 that has a rod extends into the central hole of the pressure-adjustment spring 5 to fix the pressure-adjustment spring 5 disposed substantially perpendicularly engaged to the receiving cup 4. The upper end of the pressure-adjustment spring 5 extends through an insulation ring 6 to engage to a pressure adjustment screw 7. The pressure-adjustment screw 7 is provided to screw onto the insulation ring 6 to adjust the length of the tire-pressure adjustment spring 5 during a normal operation pressure.

The upper cover assembly includes a transparent cover 13 for containing a printed circuit board 9 disposed on top of a battery 8 and supporting a light emitting diode 10 for emitting light when the battery 8 is in physical contact and then activates the circuit disposed on the printed circuit board 9. A current limiting resistor 11 is formed on the PCB 9 and is connected to the LED 10 and all these component are tightly sealed and housed in the transparent upper cover 13 by the use of a seal ring 12 to tightly engage to the base assembly by screwing onto the base assembly. One terminal of the LED 10 is connected to the current limiting resistor 11 and another terminal is engaged to a spring- plate (not specifically shown).

The cylinder housing 1 of the base unit includes inner screws to match the outer screws of the press-down ring 3 and the outer screws of the insulation ring 6. When the press-down ring 3 and the insulation ring 6 are screwed onto the cylinder housing 1, the receiving cup 4 is engaged to the pressure adjustment spring 5, and the receiving cup 4 can be moved up or down inside the cylinder housing. The receiving cup 4 can be pushed up by the tire-pressure membrane 1 or pushed down by the pressure-adjustment spring 5. Further explanations of the functions and operation processes of the tire-pressure monitoring device are provided below.

The tire-pressure monitor device with a low-pressure warning signal by using a LED light emitting diode includes a base assembly and an upper cover assembly screwed together. The base assembly includes a cylinder housing 1 that has screws to screw onto a tire-pressure stem of a tire. The tire-pressure membrane 2 is tight pressed down by the press down ring 3 and is therefore engaged to the opening of the tire-pressure stem. The tire-pressure membrane 2 is therefore pushed up with a higher tire pressure and pressed down by the tire-pressure adjustment spring 5 when the tire pressure is low. The press down ring 3 has outer screws to screw onto the inner screws of the cylinder housing 1. The insulation ring 6 surrounds the press-down ring 3 and the insulation ring 6 has outer screws to screw onto the inner screws of the cylinder housing 1. The central space of the insulation ring 6 has a ring-shaped platform with the receiving cup 4 extends therethrough with a lower end engaged to the tire-pressure membrane 2. The receiving cup 4 further has a rod extended out to adapt to and fix the angular orientation of the tire-pressure adjustment spring 5 to position substantially perpendicular to the receiving cup 4. The upper end of the tire-pressure adjustment spring 4 is engaged to a spring adjustment screw 7 fitting inside the ring-shaped platform inside the insulation ring 6. The configuration as described thus allows the receiving cup 4 to move up or down inside the surrounding structures. Furthermore, the tire-pressure adjustment screw 7 is able to adjust the engagement of the receiving cup 4 to the tire pressure membrane 2 by tightening or loosing the adjustment screw 7 to time insulation ring 6.

The upper cover assembly also has a central hollow space with screws to tightly screw onto the inner screws of the cylinder housing 1 of the base assembly. The central hollow space of the upper cover assembly also contains the printed circuit board 9 with a light emitting diode (LED) 10 and a current limiting resistor 11 connected in series. The other end of the LED is connected to a conductive spring plate to engage to the battery 8. The other end of the current limiting resistor 11 is also configured as a spring plate to engage to the inside surface of the transparent cover 13. The transparent cover 13 has outer screws to screw onto the inner screws of the cylinder housing 1 and tightly sealed through the seal ring 12.

In the process of assembling the tire-pressure monitoring device, the battery 8 is first placed inside the transparent cover 13 and screw onto the base assembly. The insulation ring 6 and the PCB are made with insulation materials and the other components are made with conductive materials. The O-ring 14 is applied to tightly seal the tire-pressure monitoring device onto the tire-pressure stem of the tire.

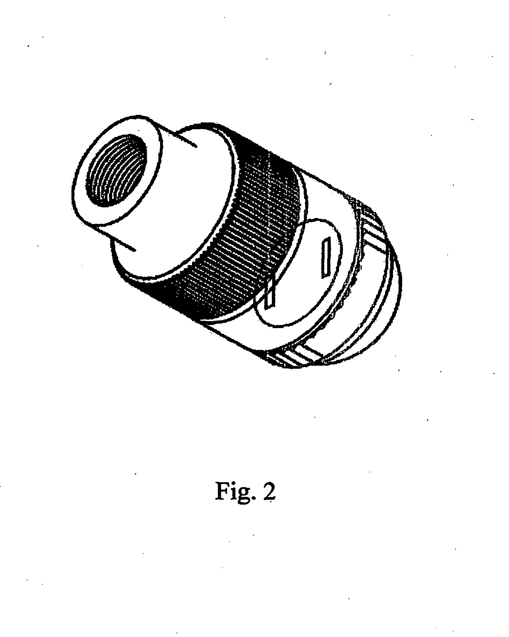

The assembling processes starts with a step of placing the tire-pressure membrane 2 into the cylinder housing 1 and then tightly pressing down by screwing the press down ring 3 onto the cylinder housing 1 such that the low part is leak proof. The receiving cup 4 is placed inside the press down ring 3 and the tire-pressure adjustment spring 5 is placed along the spring-fixing rod. Then the insulation ring is screwed onto the cylinder housing 1 thus fixes the receiving cup securely inside the cylinder housing 1. The tire spring adjustment screw 7 is then screwed onto the insulation ring to adjust the length of the tire-pressure of the adjustment spring 5. In assembling the upper cover assembly, the LED 10 and the current limiting resistor 11 are first placed and fixed to the PCT 9. The battery is placed inside the transparent cover 13 and then screwed onto the cylinder housing 1 to complete the assembling processes of the entire device as that shown in Fig. 2.

The positive electrode of the battery 8 is in contact with the spring length adjustment screw 7. The spring-length adjustment screw 7 is in contact with spring 5 and electrically connected to the receiving cup 4. The lower end of the receiving cup is in physical contact with press down ring 3 and the screws of the press down ring 3 are in physical contact with the screws of the cylinder housing. The screws of the cylinder housing 1 is near the positive electrode of the LED 10 and the negative electrode of the LED 10 is in connection with the negative electrode of the battery 8 through the spring plate that engages the current limiting resistor 11.

In normal operation pressure, the tire pressure pushes up the tire-pressure membrane 2 and the tire pressure membrane further pushes up the receiving cup 4. The connection between the receiving cup 4 and the cylinder housing 1 is broken and the power supply to the LED 10 is turned off. As the tire pressure falls below a threshold pressure, title tire-pressure adjustment spring 5 press down the receiving cup 4 to come into contact with the cylinder housing 1. The LED is now connected through the receiving cup 4 and the cylinder housing 1 to the battery. The current starts to flow through a closed current loop including the LED 10 and that causes the LED 10 to turn on. A low-pressure warning signal is there projected from the LED 10 through the transparent cover 13 to provide a warning signal of the low tire pressure condition.

According to above descriptions and drawings, this invention discloses a tire pressure-monitoring device (TPMD) directly mounted onto an air-pumping inlet-stem on a tire. The TPMD further includes a tire-pressure engaging-membrane engaged to an air pressure through the air-pumping inlet-stem pushed from an air filled in the tire. The pressure membrane pushes up a receiving cup to break an electrical connection loop in a normal tire pressure for turning off an electric power to a light emitting diode (LED) and a pressure-adjustment spring engaged to the receiving cup pushing down the pressure membrane for closing the electrical connection loop in a low tire pressure condition to turn on the LED to emit a low pressure warning light. In an exemplary embodiment, the TPMD further includes a battery for connecting and providing electric power through the electrical connection loop to the LED for emitting the low pressure warning light. In another exemplary embodiment, the TPMD further includes a transparent top cover for covering and protecting the LED and for transmitting the low-pressure warning light therethrough. In another exemplary embodiment the TPMD further includes a base cylinder housing having inner screws for screwing onto the tire-pressure inlet-stem and the base cylinder housing constituting a part of the electrical connection loop with the receiving cup encompassed therein. In another exemplary embodiment, the TPMD further includes a spring adjust screw mounted on an insulation ring and engaged to the pressure-adjustment spring for adjusting a push-down pressure against the receiving cup. In another exemplary embodiment, the TPMD further includes a -down ring for engaging to the pressure membrane and screwing onto inner screws of a base cylinder housing for pressing and maintaining the pressure membrane in a fixed position inside the base cylinder housing. In another exemplary embodiment, the insulation ring further includes outer screws for screwing on inner screws of maintaining the receiving cup inside the base cylinder housing having a fixed range of up-down movement freedom depending on a pressure changes of the tire pressure. In another exemplary embodiment, the TPMD further includes a printed circuit board for supporting circuits thereon for connecting to a battery and a current limiting resistor to function as a part of the electrical connection loop. In another exemplary embodiment, the TPMD further includes a top cover having a hollow space for containing the battery, the printed circuit board and the LED in the hollow space and the top cover further having outer screws for screwing onto inner screws of a base cylinder housing for assembling and containing the TPMD inside an integrated container housing formed by the top cover and the base cylinder housing. In another exemplary embodiment, the TPMD further includes an O-ring for sealing an interface between the top cover when screwing onto the base cylinder housing. In another exemplary embodiment, the the top cover further includes a transparent cover for transmitting a low pressure warning light when the LED is turned on in a low tire pressure tire condition.

## Claims

1. A tire pressure-monitoring device (TPMD) directly mountable onto an air-pumping inlet-stem on an air-filled tire, comprising:
- a base cylinder housing (1) having an inner screw thread to enable screwing onto said inlet-stem;
- a tire-pressure engaging-membrane (2) that, when the TPMD is mounted onto the inlet-stem of the tire, is engaged to an air pressure within said tire via said stem;
- a receiving cup (4) arranged for up-and-down movement inside the base cylinder housing (1);
- a pressure-adjustment spring (5) engaged to said receiving cup (4) and pushing it down against said membrane (2);
- a light emitting device (10) for emitting a low tire pressure warning light;
**characterized in that** the TPMD further comprises:
- a press-down ring (3) for engaging said pressure membrane (2), including an outer screw thread configured to be screwed onto an inner screw thread of said base cylinder housing (1), so as to press and maintain said membrane (2) at a fixed position inside said base cylinder housing (1);
- an insulation ring (6), including an outer screw thread configured to be screwed onto an inner screw thread of said base cylinder housing (1), for maintaining said receiving cup (4) inside said base cylinder housing (1) with a fixed range of up-down movement freedom depending on pressure changes of said tire pressure;
- a spring length adjustment screw (7) mounted on the insulation ring (6) and engaged to said pressure-adjustment spring (5) for adjusting a push-down pressure on said receiving cup (4),
wherein the spring length adjustment screw (7), the pressure-adjustment spring (5), the receiving cup (4), the press-down ring (3) and the base cylinder housing (1) are made of electrically conductive materials so as to form an electrical connection loop for powering the light emitting device (10) from a battery (8) that is insertable in said loop; and
wherein, when the TPMD is mounted on the stem of the tire, said pressure membrane (2) pushes up against the receiving cup (4) to break the electrical connection loop at a normal tire pressure so as to disable provision of electric power to the light emitter (10), while the pressure-adjustment spring (5) engaged to said receiving cup (4) pushes it down against said pressure membrane (2) to close said electrical connection loop at a low tire pressure condition so as to enable provision of electric power to the light emitter (10) in order to emit a low pressure warning light.

2. The TPMD of claim 1 further comprising:
a battery (8) for connecting and providing electric power through said electrical connection loop to said LED (10) for emitting said low pressure warning light.

3. The TPMD of claim 1 further comprising:
a transparent top cover (13) for covering and protecting said LED (10) and for transmitting said low pressure warning light therethrough.

4. The TPMD of claim 1 further comprising:
a printed circuit board (9) for supporting circuits thereon for connecting to a battery (8) and a current limiting resistor to function as a part of said electrical connection loop.

5. The TPMD of claim 4 further comprising:
a top cover (13) having a hollow space for containing said battery (8), said printed circuit board (9), and said LED (10) in said hollow space and said top cover (13) further having outer screws for screwing onto inner screws of the base cylinder housing (1) for assembling and containing said TPMD inside an integrated container housing formed by said top cover and said base cylinder housing.

6. The TPMD of claim 5 further comprising:
an O-ring (12) for sealing an interface between said top cover (13) when screwing onto said base cylinder housing (1).

7. The TPMD of claim 6 further comprising:
said top cover (13) further includes a transparent cover (13) for transmitting a low pressure warning light when said LED (10) is turned on in a low tire pressure tire condition.

## Patentansprüche

1. Reifendrucküberwachungsvorrichtung (TPMD) zur direkten Montage an dem Lufteinlassventilschaft eines Luftreifens, mit:
- einem Basis-Zylindergehäuse (1) mit einem Innengewinde zum Ermöglichen des Aufschraubens auf den Einlassschaft;
- einer Reifendruckaufnahmemembran (2), die bei an dem Einlassschaft des Reifens angebrachter TPMD mit dem Luftdruck in dem Reifen über den Schaft beaufschlagt ist;
- einem Aufnahmebecher (4), der in dem Basis-Zylindergehäuse (1) auf- und abbewegbar angeordnet ist;
- einer Druckeinstellfeder (5), die mit dem Aufnahmebecher (4) verbunden ist und diesen nach unten gegen die Membran (2) drückt;
- einer Licht emittierenden Vorrichtung (10) zum Ausgeben eines einen geringen Reifendruck anzeigenden Warnlichts,
**dadurch gekennzeichnet, dass** die TPMD ferner aufweist:
- einen Niederdrückring (3) zum Angreifen an der Druckmembran (2), mi einem Außengewinde, das zum Schrauben in ein Innengewinde des Basis-Zylindergehäuses (1) ausgebildet ist, um die Membran (2) in eine feste Position in dem Basis-Zylindergehäuse (1) zu drücken und in dieser zu halten;
- einen Isolierring (6) mit einem Außengewinde, das zum Schrauben in ein Innengewinde des Basis-Zylindergehäuses (1) ausgebildet ist, um den Aufnahmebecher (4) in dem Basis-Zylindergehäuse (1) mit einem festen Bereich der Freiheit der Auf- und Abbewegung, die von den Druckänderungen des Reifendrucks abhängig ist, zu halten;
- eine Federlängeneinstellschraube (7), die an dem Isolierring (6) angebracht ist und mit der Druckeinstellfeder (5) verbunden ist, um den Niederdrück-Druck auf den Aufnahmebecher (4) einzustellen,
wobei die Federlängeneinstelischraube (7), die Druckeinstellschraube (5), der Aufnahmebecher (4), der Niederdrückring (3) und das Basis-Zylindergehäuse (1) aus elektrisch leitfähigen Materialien bestehen, um einen elektrischen Verbindungskreis zu bilden, um die Licht emittierende Vorrichtung (10) von einer in den Kreis einsetzbaren Batterie (8) aus mit Energie zu versorgen; und
wobei, bei an dem Ventilschaft des Reifens angebrachter TPMD, die Druckmembran (2) gegen den Aufnahmebecher (4) nach oben drückt, um bei einem normalen Reifendruck den elektrischen Verbindungskreis zu unterbrechen, so dass die Versorgung des Lichtemitters (10) mit elektrischer Energie unterbunden ist, während die mit dem Aufnahmebecher (4) verbundene Druckeinstellfeder (5) diesen gegen die Druckmembran (2) nach unten drückt, um den elektrischen Verbindungskreis bei geringem Reifendruck zu schließen, so dass die Versorgung des Lichtemitters (10) mit elektrischer Energie zur Ausgabe eines einen niedrigen Reifendruck anzeigenden Warnlichts ermöglicht ist.

2. TPMD nach Anspruch 1, ferner mit:
einer Batterie (8) zum Verbinden mit und zum Liefern von elektrischer Energie durch den elektrischen Verbindungskreis an die LED (10) zur Ausgabe des einen niedrigen Reifendruck anzeigenden Warnlichts.

3. TPMD nach Anspruch 1, ferner mit:
einer transparenten oberen Abdeckung (13) zum Abdecken und Schützen der LED (10) und zum Ausgeben des einen niedrigen Reifendruck anzeigenden Warnlichts durch diese hindurch.

4. TPMD nach Anspruch 1, ferner mit:
einer Platine (9) zum Tragen von Schaltungen, die der Verbindung mit einer Batterie (8) dienen, und einem Strombegrenzungswiderstand, der als Teil des elektrischen Verbindungskreises arbeitet.

5. TPMD nach Anspruch 4, ferner mit:
einer oberen Abdeckung (13) mit einem Hohlraum zum Aufnehmen der Batterie (8), der Platine (9) und der LED (10) in dem Hohlraum, und wobei die obere Abdeckung (13) ferner ein Außengewinde zum Schrauben in ein Innengewinde des Basis-Zylindergehäuses (1) aufweist, um die TPMD in ein integriertes Zylindergehäuse zu montieren und dort zu halten, das durch die obere Abdeckung und das Basis-Zylindergehäuse gebildet ist.

6. TPMD nach Anspruch 5, ferner mit:
einem O-Ring (12) zum Abdichten einer angrenzenden Fläche der oberen Abdeckung (13) beim Schrauben auf das Basis-Zylindergehäuse (1).

7. TPMD nach Anspruch 6, bei welcher ferner:
die obere Abdeckung (13) eine transparente Abdeckung (13) aufweist, um ein einen niedrigen Reifendruck anzeigendes Warnlicht auszugeben, wenn die LED (10) im Falle eines geringen Reifendrucks eingeschaltet ist.

## Revendications

1. Dispositif de contrôle de pression des pneus (TPMD) pouvant être installé directement sur un corps de valve d'entrée de pompage d'air sur un pneu rempli d'air, comprenant :
un boîtier de cylindre de base (1) ayant un filetage de vis interne pour permettre le vissage sur ledit corps de valve d'entrée ;
une membrane d'engagement de pression de pneu (2) qui, lorsque le TPMD est monté sur le corps de valve d'entrée du pneu, est engagée à une pression d'air dans ledit pneu via ledit corps de valve ;
une cuve de réception (4) agencée pour mouvement vers le haut et vers le bas à l'intérieur du boîtier de cylindre de base (1) ;
un ressort de réglage de pression (5) engagé sur ladite cuve de réception (4) et poussant celle-ci vers le bas contre ladite membrane (2) ;
un dispositif électroluminescent (10) pour émettre un voyant d'avertissement de pression de pneu faible ;
**caractérisé en ce que** le TPMD comprend en outre :
une bague de pression descendante (3) pour engager ladite membrane de pression (2), comprenant un filetage de vis externe configuré pour être vissé sur un filetage de vis interne dudit boîtier de cylindre de base (1), de manière à appuyer sur et maintenir ladite membrane (2) à une position fixe à l'intérieur dudit boîtier de cylindre de base (1) ;
une bague d'isolation (6), comprenant un filetage de vis externe configuré pour être vissé sur un filetage de vis interne dudit boîtier de cylindre de base (1), pour maintenir ladite cuve de réception (4) à l'intérieur dudit boîtier de cylindre de base (1) avec une plage fixe de liberté de mouvement haut-bas suivant les changements de pression de ladite pression de pneu ;
une vis d'ajustement de longueur de ressorts (7) montée sur la bague d'isolation (6) et engagée avec ledit ressort d'ajustement de pression (5) pour ajuster une pression de poussée descendante sur ladite cuve de réception (4),
où la vis d'ajustement de longueur de ressort (7), le ressort d'ajustement de pression (5), la cuve de réception (4), la bague de pression descendante (3) et le boîtier de cylindre de base (1) sont constitués de matériaux électriquement conducteurs de manière à former une boucle de connexion électrique pour alimenter le dispositif électroluminescent (10) depuis une batterie (8) qui peut être insérée dans ladite boucle ; et
où, lorsque le TPMD est monté sur le corps de valve du pneu, ladite membrane de pression (2) pousse contre la cuve de réception (4) pour rompre la boucle de connexion électrique à une pression de pneu normale de manière à désactiver l'alimentation d'électricité vers le dispositif électroluminescent (10), tandis que le ressort d'ajustement de pression (5) engagé avec ladite cuve de réception (4) pousse celle-ci vers le bas contre ladite membrane de pression (2) pour fermer ladite boucle de connexion électrique dans une condition de pression de pneu faible de manière à permettre l'alimentation d'électricité du dispositif électroluminescent (10) afin d'émettre un voyant d'avertissement de pression faible.

2. TPMD de la revendication 1 comprenant en outre :
une batterie (8) pour connecter et fournir de l'électricité par l'intermédiaire de ladite boucle de connexion électrique audit LED (10) pour émettre ledit voyant d'avertissement de pression faible.

3. TPMD de la revendication 1 comprenant en outre :
un couvercle supérieur transparent (13) pour recouvrir et protéger ledit LED (10) et pour transmettre ledit voyant d'avertissement de pression faible à travers celui-ci.

4. TPMD de la revendication 1 comprenant en outre :
une carte de circuit imprimé (9) pour soutenir des circuits sur celle-ci pour connexion à une batterie (8) et une résistance de limitation de courant pour fonctionner en tant que partie de ladite boucle de connexion électrique.

5. TPMD de la revendication 4 comprenant en outre :
un couvercle supérieur (13) ayant un espace creux pour contenir ladite batterie (8), ladite carte de circuit imprimé (9), et ledit LED (10) dans ledit espace creux et ledit couvercle supérieur (13) ayant en outre des vis extérieures pour vissage sur des vis intérieures du boîtier de cylindre de base (1) pour assembler et contenir ledit TPMD à l'intérieur d'un boîtier de conteneur intégré formé par ledit couvercle supérieur et ledit boîtier de cylindre de base.

6. TPMD de la revendication 5 comprenant en outre :
un joint torique (12) pour étanchéifier une interface entre ledit couvercle supérieur (13) lors du vissage sur ledit boîtier de cylindre de base (1).

7. TPMD de la revendication 6 comprenant en outre :
ledit couvercle supérieur (13) comprenant en outre un couvercle transparent (13) pour transmettre un voyant d'avertissement de pression faible lorsque ledit LED (10) est activé dans une condition de pression de pneu faible.
